# EUROPÄISCHE PATENTSCHRIFT

(11) **EP 0 802 075 B1**
(45) Veröffentlichungstag und Bekanntmachung des Hinweises auf die Patenterteilung: **25.04.2001**
(21) Anmeldenummer: 97104926.7
(22) Anmeldetag: 22.03.1997
(51) Int. Cl.: B60G 7/02, B62D 21/11

(54) **Hilfsrahmen**
Subframe
Châssis auxiliaire

(30) Priorität: 18.04.1996 DE 19615207
(43) Veröffentlichungstag der Anmeldung: 22.10.1997
(73) Patentinhaber: Dr.Ing.h.c. F. Porsche Aktiengesellschaft, 70435 Stuttgart (DE)
(72) Erfinder: Schote, Norbert, 72119 Ammerbuch (DE); Söffge, Friedhelm, 71229 Leonberg (DE)

(56) Entgegenhaltungen:
- EP-A- 0 301 782
- DE-A- 3 635 612
- DE-A- 4 129 538
- GB-A- 2 270 508
- PATENT ABSTRACTS OF JAPAN vol. 011, no. 076 (M-569), 7. März 1987 & JP 61 232910 A (HONDA MOTOR CO LTD), 17. Oktober 1986

## Beschreibung

Die Erfindung bezieht sich auf einen Hilfsrahmen für die schwenkbare Anlenkung von Lenkerarmen einer Radaufhängung nach dem Oberbegriff des Anspruchs 1.

Aus der DE-C-41 29 538 ist ein Seitenträger für die schwenkbare Anordnung von Lenkerarmen einer Radaufhängung in einem Fahrzeug bekannt, welcher über zwei Lager am Fahrzeugaufbau befestigt ist. Zur gegenseitigen Abstützung der Seitenträger sind diese über Querbrücken miteinander verbunden. Aus der GB-A-22 70 508 ist ein Hilfsrahmen zur schwenkbaren Anlenkung von Lenkerarmen einer Radaufhängung eines Kraftfahrzeugs mittels eines am Aufbau abgestützten Seitenträgers bekannt. Der Seitenträger ist über mindestens drei elastische Lager am Fahrzeugaufbau gehalten, wobei in Bezug auf die Fahrtrichtung ein vorderes und hinteres elastisches Lager auf einer schräg nach hinten ansteigend angestellten Ebene und das weitere Lager zwischen diesen beiden Lagern in einem Abstand oberhalb dieser Ebene angeordnet ist. Desweiteren ist aus der EP-A-301 782 eine Aufhängungseinheit für ein Fahrzeug mit einem Unterrahmen und einem mit diesem verbundenen sich aufrecht erstreckenden Rahmengestell bekannt, an dem Lagerungen für eine Radaufhängung vorgesehen sind, wobei der Unterrahmen Lagerungen zum Befestigen am Fahrzeugaufbau sowie für eine Radaufhängung aufweist. Ferner ist aus der
DE-A-36 35 612 eine Fahrzeugaufhängung mit Aufhängungsarmen, die jeweils ein Rad tragen bekannt, die an einem Unterrahmen angelenkt sind. Der Unterrahmen ist über sechs elastische Montageelemente mit dem Fahrzeugaufbau verbunden, wobei an den vorderen Enden des u-förmigen Unterrahmens jeweils zwei elastische Lager und an den hinteren Enden jeweils ein elastisches Lager zur Verbindung mit dem Fahrzeugaufbau vorgesehen ist.

Aufgabe der Erfindung ist es, einen verbesserten Hilfsrahmen mit zwei Seitenträgern zu schaffen, die ohne eine gegenseitige Abstützung bei auf das Rad einwirkenden Kräften eine stabile Abstützung der Radaufhängung gewährleisten.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Seitenträger zur Momentaufnahme aus Radkräften keine brückenartigen Abstützungen mehr aufweisen, sondern oberhalb einer hinteren und eines vorderen Lagers ein Mittenlager vorgesehen ist. Dieses Mittenlager ist in einem definierten Abstand zu den weiteren Lagern angeordnet, wodurch Momente aus Kräften auf das Rad wirksam abgestützt werden können.

Der Seitenträger besteht aus einem U-profilförmigen und nach oben hin offenen Segment, das aufgrund der Anordnung der Lager jeweils an den freien Enden der Segmentschenkeln nicht als geschlossenes Kastenprofil ausgebildet sein muß, da das Mittenlager und ein hinteres Lager eine unmittelbare stabile Abstützung zum Fahrzeugaufbau bewirken.

Damit möglichst keine kardanischen Bewegungen über die elastischen Lager im Seitenträger eintreten können, sind diese als längliche Lager in vertikaler Ausrichtung mit einer starren Lagerhülse und einer zwischen dieser und einer Aufnahme im Seitenteil angeordnetem elastischen Element ausgeführt. Über eine Befestigungsschraube ist das elastische Element axial am Fahrzeugaufbau vorgespannt.

Vorzugsweise sind die elastischen Lager in sog. Pfeiffen, die am Seitenträger angeformt sind, gehalten, welche in einer gemeinsamen senkrechten Ebene angeordnet sind. Unmittelbar benachbart der Aufnahmen für die elastischen Lager sind Lageraufnahmen für die Lenkerarme vorgesehen, so daß sich eine steife und stabile Abstützung für die Radaufhängung ergibt.

Die Seitenträger sind nicht über Querträger miteinander verbunden und ein Verschwenken des Seitenträgers um eine durch vordere und hintere Lager verlaufende Achse wird somit durch das Mittenlager vermieden. Hierdurch wird erreicht, daß die Momente aus der Radlast und den Seitenkräften nur durch die elastischen Lager übertragen bzw. abgestützt werden.

Ein Ausführungsbeispiel der Erfindung ist in der Zeichnung dargestellt und wird im folgenden näher beschrieben.
Es zeigen
- Fig. 1: eine schaubildliche Darstellung eines Seitenträgers,
- Fig. 2: eine prinzipielle Darstellung der auftretenden Momente aus auf das Rad einwirkenden Kräften,

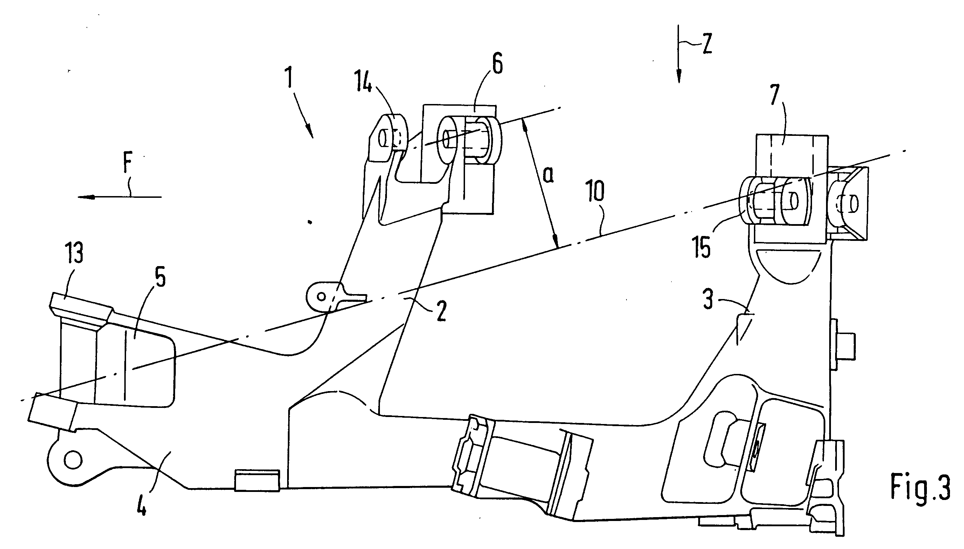

- Fig. 3: eine Seitenanischt des Seitenträgers von außen her gesehen,
- Fig. 4: eine Ansicht des Seitenträgers in Pfeilrichtung Z gesehen,

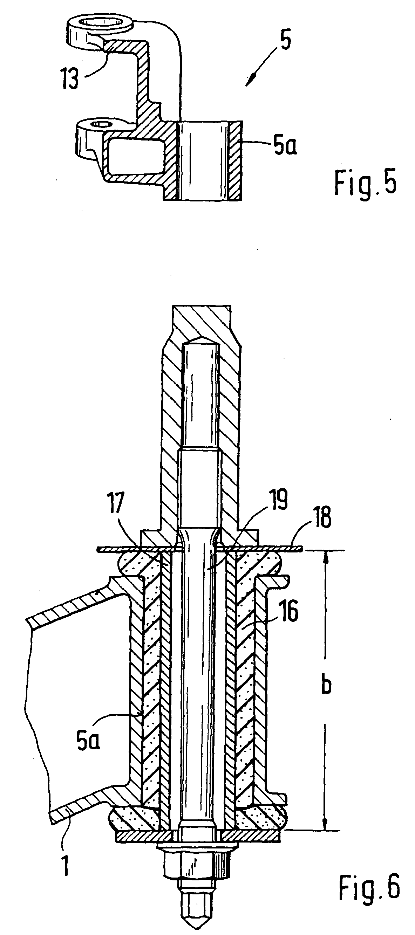

- Fig. 5: einen Schnitt durch eine vordere Lageraufnahme und
- Fig. 6: einen Schnitt durch ein elastisches Lager im eingebautem Zustand in vergrößerter Darstellung.

Ein Hilfsrahmen zur schwenkbaren Aufnahme von Radführungslenkern einer Radaufhängung umfaßt im wesentlichen zwei Seitenträger 1, wobei jeweils ein Seitenträger je Fahrzeugseite bzw. je Fahrzeugrad vorgesehen ist.

Der Seitenträger 1 besteht aus einem U-profilförmigen Segment, das nach oben hin offen ausgeführt ist und zwei Segmentschenkel 2, 3 sowie ein verlängertes Stegteil 4 aufweist. Über drei eleastische Lager 5, 6 und 7, die in Aufnahmen 5a, 6a und 7a in Form von sog. Pfeiffen aufgenommen sind, wird der Seitenträger 1 mit dem Fahrzeugaufbau verbunden.

Das vordere Lager 5 und das hintere Lager 7 sind - in bezug auf die Fahrrichtung F - auf einer schräg angestellten Ebene 10 angeordnet. Das vornliegende Lager 5 ist am verlängerten Stegteil 4 und die beiden weiteren Lager 6 und 7 sind an den freien Enden der Segmentschenkel 2 und 3 in den Aufnahmen 6a, 7a gehalten. Oberhalb dieser Ebene 10 ist die Aufnahme 6a des mittigen Lagers 6 in einem Abstand a am Schenkel 2 des Seitenträgers 1 angeformt.

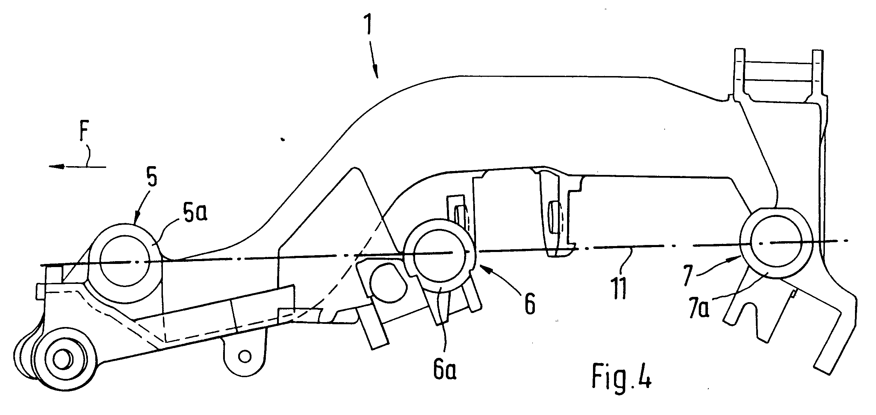

Die Lager 5, 6 und 7 bzw. die Lageraufnahmen 5a, 6a und 7a sind in Draufsicht gesehen (Fig. 4) in einer gemeinsamen senkrechten Ebene 12 vorgesehen.

Die Lageraufnahmen 5a, 6a und 7a weisen benachbart die Lagerorte 13, 14, 15 für die Lenkerarme der Radaufhängung auf, so daß eine feste, unveränderliche örtliche Abstützung für die Radaufhängung gewährleistet ist.

Die elastischen Lager 5, 6 und 7 sind mit einer Länge b ausgestaltet, damit weitestgehend kardanische Bewegungen im Fahrbetrieb ausgeschaltet werden können. Das Lager 5, 6 und 7 umfaßt ein längliches elastiches Hülsenelement 16, welches auf einer Metallhülse 17 gehalten wird. Eine axiale Verspannung in den Aufnahmen 5a, 6a, 7a der Seitenträger 1 erfolgt jeweils über eine Schraube 19 am Fahrzeugaufbau 18.

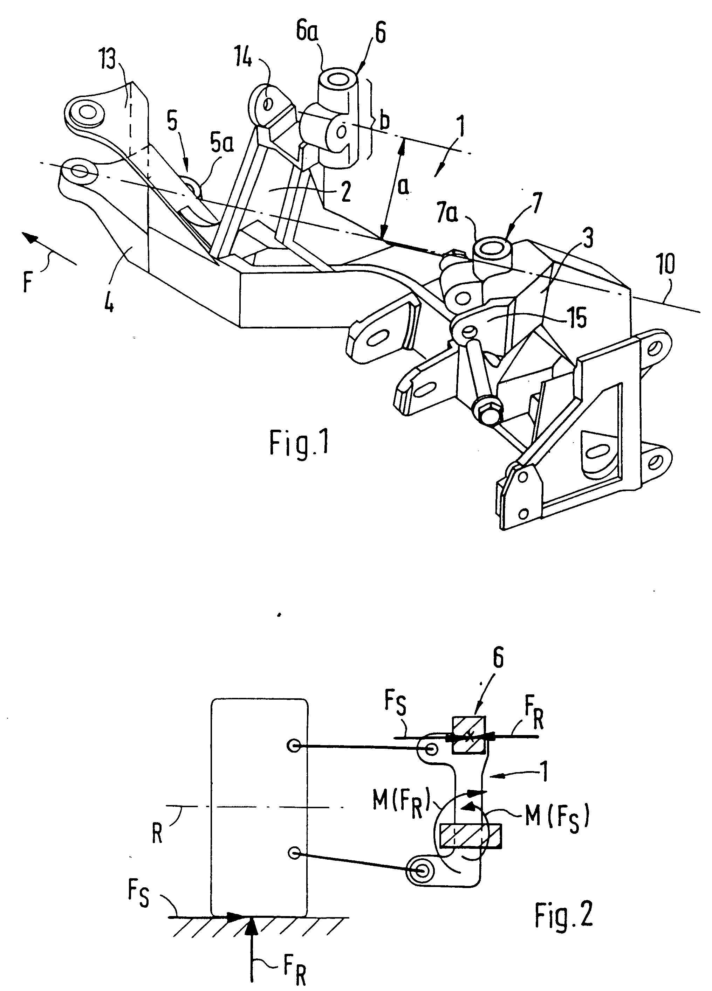

Wie in Fig.2 an Hand einer Prinzipdarstellung gezeigt, wird im Fahrbetrieb bei auf das Rad einwirkenden Kräften, wie beispielsweise Seitenkräften F_{S}, Radlastkräften F_{R}, Antriebs- oder Bremskräfte Momente um die durch das vordere und hintere Lager verlaufende Achse jeder Radseite erzeugt. Damit diese Momente abgestützt werden können, ohne daß eine Querträgerabstützung zwischen den Seitenträgern vorzusehen ist, wird ein hochgesetztes Mittenlager 6 am Seitenträger 1 vorgesehen, welches eine zusätzliche Gegenkraft bewirkt und das Moment M durch F_{R} und F_{S} abgestützt wird.

## Patentansprüche

1. Hilfsrahmen für die schwenkbare Anlenkung von Lenkerarmen einer Radaufhängung eines Kraftfahrzeuges mit am Aufbau des Kraftfahrzeugs abgestützten Seitenträgern (1), wobei diese über mindestens drei elastische Lager (5, 6, und 7) am Fahrzeugaufbau (18) abgestützt sind, und - in bezug auf die Fahrtrichtung F - das vordere und hintere elastische Lager (5, 7) auf einer schräg nach hinten ansteigend angestellten Ebene (10) und das weitere Lager (6) zwischen diesen beiden Lagern (5 und 7) oberhalb dieser Ebene (10) angeordnet ist, dadurch gekennzeichnet, daß die drei elastischen Lager stehend angeordnet sind und die Seitenträger (1) aus einem nach oben hin offenen U-förmigen Segment bestehen, wobei - in bezug auf die Fahrtrichtung F - das hintere und mittlere elastische Lager (7 und 6) an den freien oberen Enden von Segmentschenkeln (2, 3) angeordnet sind und das vordere elastische Lager (5) endseitig an einer Stegverlängerung (4) des Segments vorgesehen ist und jeder Seitenträger (1) des Fahrzeugs unabhängig vom anderen Seitenträger am Fahrzeugaufbau (18) über die drei elastischen Lager (5, 6 und 7) gehalten wird .

2. Hilfsrahmen nach Anspruch 1, dadurch gekennzeichnet, daß das mittlere elastische Lager (6) als Momentstützlager für auf das Rad einwirkenden Kräften ausgebildet ist und oberhalb einer Raddrehachse (R) angeordnet ist.

3. Hilfsrahmen nach einem oder mehreren der vorhergehenden Ansprüche, dadurch gekennzeichnet, daß die drei elastischen Lager (5, 6, und 7) in einer gemeinsamen senkrechten Ebene (11) angeordnet sind.

4. Hilfsrahmen nach einem oder mehreren der vorhergehenden Ansprüche, dadurch gekennzeichnet, daß unmittelbar benachbart jeden elastischen Lagers (5, 6 und 7) eine Lageraufnahme (13, 14, 15) für Lenkerarme der Radaufhängung vorgesehen sind.

5. Hilfsrahmen nach einem oder mehreren der vorhergehenden Ansprüche, dadurch gekennzeichnet, daß die Lager (5, 6 und 7) kardanisch steif ausgeführt sind und sich in einer vertikalen Richtung erstrecken und aus einem länglichen elastischen Hülsenelement (16) besteht, das zwischen der Aufnahme (5a, 6a und 7a) im Seitenträger (1) und einer starren Lagerhülse (17) axial vorgespannt an einem Längsträger des Fahrzeugaufbaues (18) gehalten ist.

## Claims

1. A sub-frame for the pivotable coupling of control arms of a wheel suspension of a motor vehicle, having side members (1) supported on the body of the motor vehicle, wherein the said side members (1) are supported on the vehicle body (18) by way of at least three resilient bearings (5, 6 and 7), and - with respect to the direction of travel **F** - the front and the rear resilient bearings (5, 7) are situated in a plane (10) ascending obliquely towards the rear and the further bearing (6) is situated above this plane (10) and between the said two bearings (5 and 7), **characterized in that** the three resilient bearings are arranged vertically and the side members (1) comprise a U-shaped segment open at the top, wherein - with respect to the direction of travel **F** - the rear and the middle resilient bearings (7 and 6) are arranged at the free upper ends of segment arms (2, 3), and the front resilient bearing (5) is provided at the end of a web extension (4) of the segment, and each side member (1) of the vehicle is held independently of the other side member on the vehicle body (18) by way of the three resilient bearings (5, 6 and 7).

2. A sub-frame according to Claim 1, **characterized in that** the middle resilient bearing (6) is constructed in the form of a torque-absorbing bearing for forces acting upon the wheel and is arranged above a wheel centre line (**R**).

3. A sub-frame according to one or more of the preceding Claims, **characterized in that** the three resilient bearings (5, 6 and 7) are arranged in a common vertical plane (11).

4. A sub-frame according to one or more of the preceding Claims, **characterized in that** a bearing receiving means (13, 14, 15) for control arms of the wheel suspension is provided immediately adjacent to each resilient bearing (5, 6 and 7).

5. A sub-frame according to one or more of the preceding Claims, **characterized in that** the bearings (5, 6 and 7) are stiff in terms of a universal joint and extend in a vertical direction and comprise an elongate resilient sleeve member (16) held, axially pre-stressed between the receiving means (5, 6a and 7a) in the side member (1) and a rigid bearing sleeve (17), on a longitudinal member of the vehicle body (18).

## Revendications

1. Cadre auxiliaire pour l'articulation pivotante de bras oscillants d'une suspension de roue d'un véhicule automobile au moyen de supports latéraux (1) soutenus sur la carrosserie du véhicule, ces supports latéraux étant soutenus sur la carrosserie (18) du véhicule par au moins trois paliers élastiques (5, 6 et 7), et le palier élastique avant (5) et le palier élastique arrière (7), par rapport au sens de marche (F), étant disposés sur un plan (10) incliné, montant obliquement vers l'arrière, et l'autre palier (6) étant disposé entre ces deux paliers (5 et 7) au-dessus de ce plan (10), caractérisé en ce que les trois paliers élastiques sont disposés verticalement et les supports latéraux (1) sont constitués d'un segment en U ouvert vers le haut, le palier élastique arrière (7) et le palier élastique central (6), par rapport au sens de marche (F), étant disposés aux extrémités libres supérieures de branches (2, 3) du segment et le palier élastique avant (5) étant prévu à l'extrémité d'un prolongement (4) du dos du segment, et chaque support latéral (1) du véhicule est maintenu indépendamment de l'autre support latéral sur la carrosserie (18) du véhicule, par les trois paliers élastiques (5, 6 et 7).

2. Cadre auxiliaire selon la revendication 1, caractérisé en ce que le palier élastique central (6) est réalisé en tant que palier d'appui des moments pour les forces qui s'exercent sur la roue et est disposé au-dessus d'un axe de rotation (R) de la roue.

3. Cadre auxiliaire selon une ou plusieurs des revendications précédentes, caractérisé en ce que les trois paliers élastiques (5, 6 et 7) sont disposés dans un plan vertical (11) commun.

4. Cadre auxiliaire selon une ou plusieurs des revendications précédentes, caractérisé en ce qu'un logement de palier (13, 14, 15) est prévu pour des bras oscillants de la suspension de roue, directement au voisinage de chaque palier élastique (5, 6 et 7).

5. Cadre auxiliaire selon une ou plusieurs des revendications précédentes, caractérisé en ce que les paliers (5, 6 et 7) sont réalisés rigides à la cardan et s'étendent dans une direction verticale, et sont constitués d'un élément en douille (16) élastique et allongé, qui est maintenu axialement précontraint entre le logement (5a, 6a et 7a) dans le support latéral (1), et une douille de palier (17) rigide, sur un longeron de la carrosserie (18) du véhicule.
